# EUROPEAN PATENT SPECIFICATION

(11) **EP 0 784 533 B1**
(45) Date of publication and mention of the grant of the patent: **25.04.2001**
(21) Application number: 95934388.0
(22) Date of filing: 05.10.1995
(51) Int. Cl.: B29C 45/14, B29C 33/12

(54) **PROCESS OF INCORPORATING A UNIT OR OBJECT BY MOULDING**
SPRITZGIESSVERFAHREN WOBEI EINHEITEN ODER GEGENSTÄNDE EINGEFORMT WERDEN
PROCEDE PERMETTANT D'INCORPORER UNE UNITE OU UN OBJET PAR MOULAGE

(30) Priority: 06.10.1994 SE 9403378
(43) Date of publication of application: 23.07.1997
(73) Proprietor: PERSTORP AB, 284 80 Perstorp (SE)
(72) Inventor: CARLSSON, Robin, A-724 63 Västeras (SE)
(74) Representative: Görg, Klaus, Dipl.-Ing.
(86) International application number: SE9501141
(87) International publication number: WO9611098

(56) References cited:
- EP-A- 0 342 237
- WO-A-93/24381
- PATENT ABSTRACTS OF JAPAN, Vol. 15, No. 109, M-1093; & JP,A,03 005 105, (INOUE MTP CO LTD), 10 January 1991.
- PATENT ABSTRACTS OF JAPAN, Vol. 11, No. 135, M-585; & JP,A,61 273 920, (MITSUBISHI PLASTICS IND LTD), 4 December 1986.

## Description

The present invention relates to a process of incorporating one or more units or objects into an article, such as a transport and/or storage container, a waste container, a pallet or the like according to the precharacterising part of claim 1.

A process of this type is known from e.g. JP-A-03-005 105.

An injection moulding is most suitably performed using a moulding tools provided with at least one mould cavity. The objects are preferably selected among information carrying units and other identifying objects, such as smart cards, radio transmitters and/or receivers, micro processors and other units holding electronic and/or magnetic read/write information.

Information carrying units can be characterised as memory units transmitting and/or receiving information for automatic identification of for instance container type, content, owner, destination, etc. Objects or units incorporated into the material are i.a. alternative to such identifying objects as adhesive labels and in various ways mechanically arranged labels and similar objects.

Various identifying objects or units are today used on articles such as transport and/or storage containers within the food processing industry and on waste containers. The identifying objects are most often labels and other memory units being externally arranged on said articles, which arrangement often includes rivets, clinch nails, clips, label holders, glue and adhesives. An external arrangement and an attachment as disclosed imply damaged or lost identifying objects due to continuous handling, harsh treatment, ungenial weather conditions etc., with pendant loss of information.

Incorporation of objects, such as various information carrying units, into polymeric materials by injection moulding is by known procedures difficult or requires complex moulding tools having a number of additional moving parts. Furthermore, location and fixation of the object create problems, such as required minimum size (breadth and/or width), mechanical deformation and bad fitting or leakage between the object and the polymeric material. The shear stress during injection of polymeric material is extensive and requires a firm fixation of the object or unit. Known methods used for fixation, during an injection moulding, of objects to be incorporated into a polymeric material include fixation by means of vacuum, fixation by means of steps in the moulding tool, squeezing between two or more mould parts and/or moving or stationary holders such as racks, pins, bars, rods etc. arranged in the mould or in parts thereof.

JP-A-03005105 discloses a process for incorporating one object into an article. For this purpose a cap is forced into a recess in the wall of a mould, together with an object that is supposed to be integrated with the moulded article . The cap has protrusions and recessed parts on the outer surface to be securely fixed in a mould plate. When the object is fixed in the cap and the cap is fixed in the recessed part of the mould plate then resin is cast into a cavity between the mould surface of the top mould plate and a mould surface of the bottom mould plate. The cap keeps the part to be integrated in place during the injection moulding and has to be removed and perhaps reused afterwards. The function carrying part that is incorporated with the article is protruding from the surface of the article.

JP-A-61273920 describes a similar method. A core is inserted into a recess provided at an upper metallic mould. The core is attracted by a magnet. The object to be integrated in a moulded product is fixed to the core and therefore through the core to the upper mould. The resin is then injected into the cavity and the core is taken out of the mould together with the moulded product after completing the injection moulding process. Finally, the core is removed from the insert and probably reused. The insert protrudes from the moulded product.

WO-A-93/24381 describes a method for providing a transport or storage structure with a remote-readable escort memory. For this purpose the escort memory 7 is closed into a protective housing. Then the escort memory is fixed together with its protective housing to a transport or storage structure by an injection moulding process, thereby the escort memory, i.e. the object, is fixed by squeezing between two mould parts during the injection moulding process.

The European Patent Application 0 342 237 discloses a procedure, whereby an item to be incorporated into a polymeric material is fixed by means of moving holders being an integrated part of the moulding tool. The item is introduced into the open mould and fixed and held at the accurate position by moving forth the tips of the holders. The mould is then closed and the item is held by the holders during injection of the molten polymeric material. The last stages of the moulding cycle include moving the holders back away from the item to the same plane as the surface of the mould followed by an additional injection of molten polymeric material to fill holes caused by the holders. This procedure display above disclosed disadvantages and in addition thereto an increased tendency to material cracking due to the additional injection resulting in differences in the material temperature, material thickness and shrinkage.

Starting from JP-A-03-005105 it is the object of the invention to improve a process of incorporating one or more objects into a moulded polymeric material.

This object is attained according to the invention by the process as defined in claim 1.

Particular embodiments of the invention are the subject of the dependent claims.

Above discussed problems and drawbacks are through the present invention avoided and a simple and reliable process of importing a unit or object into a moulded polymeric material is provided. The process includes the use of a moulding toll without additional moving parts and hence no holes to be filled through an additional supply of polymeric material.

The unit or object to be incorporated is on one face provided with at least one longitudinal undercut tenon or groove. The object is in preferred embodiments provided with at least one undercut tenon. The wall of the mould cavity of the moulding tool is provided with at least one undercut groove or tenon corresponding to the tenons or grooves being parts of the unit or object, whereby tenons/grooves on the unit are brought into engagement with corresponding grooves/tenons in the wall of the open moulding tool. The unit is securely fixed and held by said grooves and tenons.
The moulding tool is closed and molten polymeric material is supplied, preferably by injection, to the closed mould cavity, resulting in a n incorporation of said unit or object into said polymeric material. The unit is , when the moulding cycle is completed, an integrated part of the injection moulded article.

In preferred embodiments wherein the unit or object is provided with at least one tenon, the length of a corresponding groove in the mould cavity exceeds the length of such a tenon, resulting in a small cavity above or beneath the tenon. This small cavity is during injection filled with molten polymeric material, whereby providing a securing heel or the like.

The unit or object to be incorporated can, in various embodiments, be provided with one or more upwards and/or downwards directed pegs or the like, which pegs works as vertical fixation means. The mould cavity can alternatively be provided with one or more inwards directed pegs, heads, knobs or the like.

The incorporated unit or object is in various preferred embodiments incorporated as a part of or adjacent a profile being an integrated part of the injection moulded article, such as an upper and/or lower rim or a reinforcing web, rib, etc.

Incorporated units and objects include advantageously memory units such as smart cards, micro chips, radio transmitters and/or receivers, micro processors or other magnetic and electronic units being able to hold for instance analogue or digital read/write information.

The process according to the present invention provides a facilitated incorporation of various units and objects into the polymeric material of injection moulded articles. The process furthermore permits a high degree of flexibility with regard to type of unit or object as well as its location.

A unit or object incorporated according to the present invention is, with exception for optional pegs and the like and minor portions of the tenons, entirely incorporated into the polymeric material. Pegs etc. have preferably a size allowing them to be in level with the material surface, whereby no parts of the unit protrude, thus eliminating the risk of lost information due to damages on the unit or object or parts thereof. The lack of joints resulting for instance from additional supply of molten polymeric material imply that any tendency to leakage between incorporated unit or object and the polymeric material is non-existent or exceptionally small and negligible.

The attendant advantages will be more fully understood from the following detailed description, taken in conjunction with appended drawings, wherein like reference numerals have been applied to like parts throughout the various Figures and wherein:
- Figure 1 shows a side view of an embodiment of a moulding tool and a unit to be incorporated, in accordance with the invention, located in a mould cavity.
- Figure 2 and 3 show seen from above two different embodiments of moulding tools and units located in mould cavities.
- Figure 4 - 7 show various embodiments of units and objects to be incorporated according to the process of the present invention. Figures 4 and 5 are seen from above and Figures 6 and 7 are seen in a view showing a face side provided with one or more tenons.
- Figure 8 shows a unit incorporated adjacent an upper rim being an integrated part of a transport container.

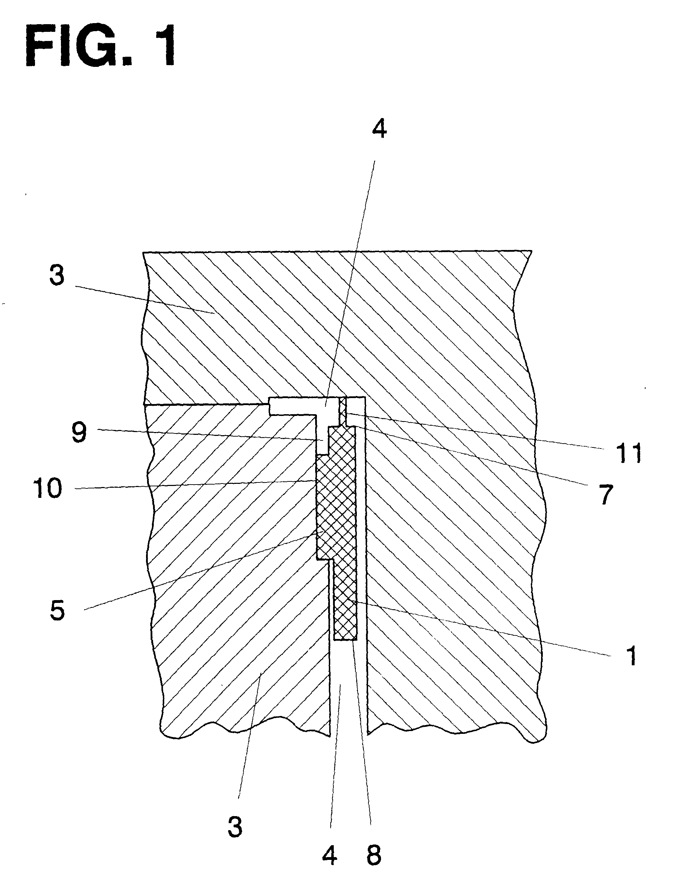

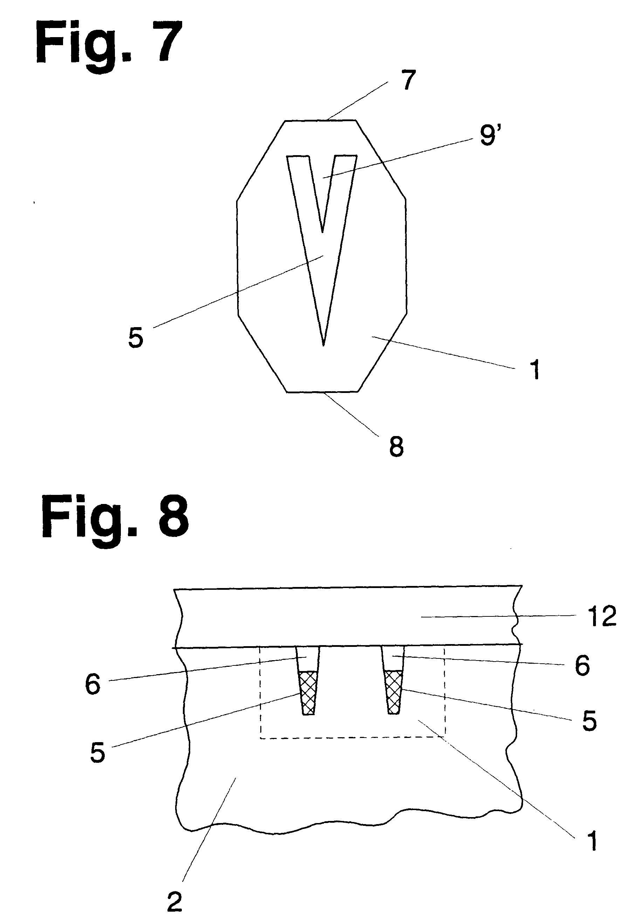

- **Figure 1** shows in a side view partially and schematically a crosscut of a moulding tool 3. A unit 1 being of a so called smart card type is located in its 3 mould cavity 4. The unit 1 has an upper part 7 provided with a peg 11 for vertical fixation of said unit 1. The unit 1 is furthermore provided with an undercut tenon 5 brought into engagement with a corresponding undercut groove 10 being a part of the mould cavity 4. The groove 10 has a length exceeding that of the tenon 5 resulting in formation of a cavity 9 above the tenon 5. The cavity 9 will during injection of a molten polymeric material be filled therewith, resulting in formation of a securing extension 6 (see Figure 8) of the tenon 5. The unit 1 has in this embodiment a lower side 8, which side 8 lacks pegs or similar arrangements for vertical and/or horizontal adjustment.

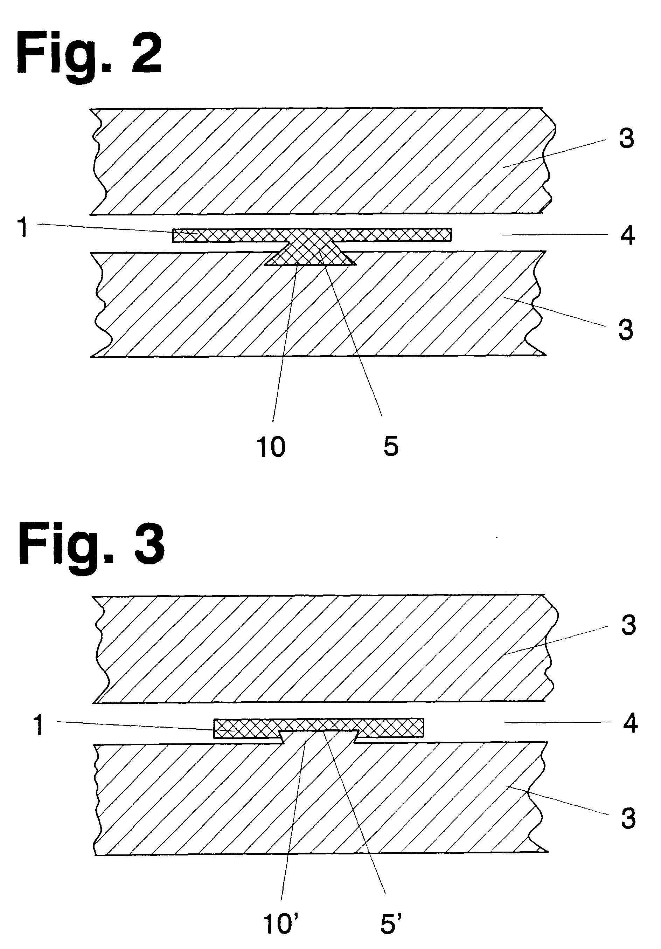

- **Figure 2 and 3** show seen from above partially and schematically crosscuts of moulding tools 3, wherein a unit 1 of the same type as shown in Figure 1 is placed in respective mould cavity 4. Figure 2 shows a unit 1 having an undercut tenon 5 and a mould cavity 4 having an undercut groove 10 and Figure 3 shows a unit provided with an undercut groove 5' and a mould cavity 4 having an undercut tenon 10'. The units 1 are fixed in the mould cavities 4 by bringing the tenons 5 and 10' into engagement with respective groove 10 and 5'.

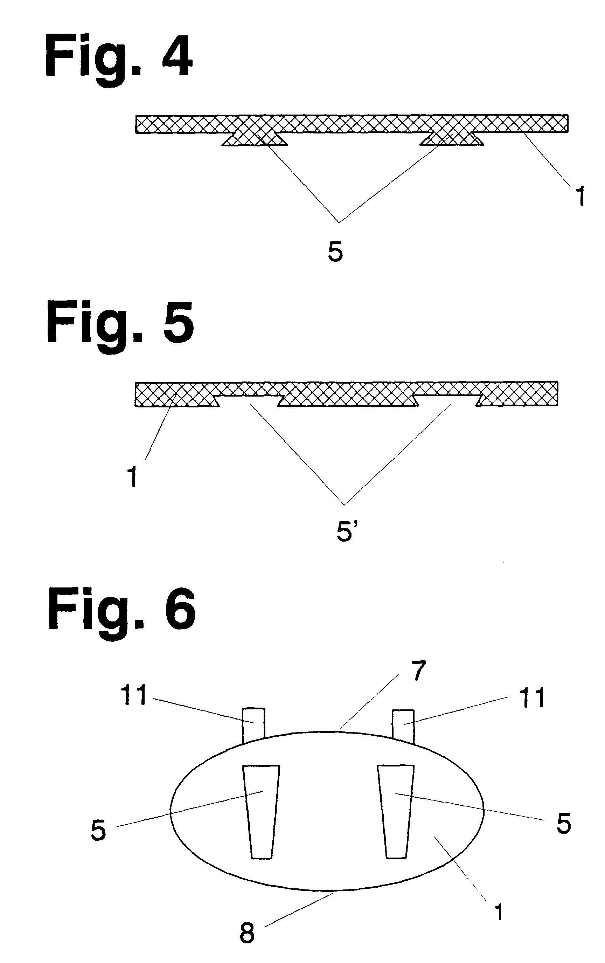

- **Figure 4 and 5** show seen from above schematically crosscuts of units and objects 1 to be incorporated, in accordance with the present invention, into an article 2 made of a polymeric material. The unit 1 shown in Figure 4 is provided with two undercut tenons 5 intended to be brought into engagement with corresponding grooves 10 (see Figure 2) and the unit 1 shown in Figure 5 is provided with two grooves 5' intended to be brought into engagement with corresponding tenons 10' (se Figure 3).
- **Figure 6** shows in a front view schematically one embodiment of a unit 1 being oval and provided with two upwards directed pegs 11 and two downwards conical tenons 5. The pegs 11 are used for vertical fixation of the unit 1 in a mould cavity 4 (se Figure 1 - 3).
- **Figure 7** shows in a front view schematically one embodiment of a unit 1 being hexagonal and provided with a V-shaped undercut tenon 5. The unit 1 has a design resulting in a cavity 9' inside the "V". The cavity 9' is filled with molten polymeric material and a securing heel consisting of polymeric material is thus formed.
- **Figure 8** shows a partial view of an injection moulded article 2 made of a polymeric material, in this case a transport container, in which a unit 1 is incorporated. A dashed line indicates the unit 1 and its position. The unit 1 is an integrated part of the article 2 and is incorporated adjacent an upper rim 12. The unit 1 is provided with two conical undercut tenons 5. The tenons 5 is levelled with the surface of the polymeric material and is thus not entirely incorporated, but not protruding. Securing extensions 6 are formed above the tenons 5. The extensions 6 are formed in the same way as disclosed under heading Figure 1.

While particular embodiments of the invention have been shown, it will be understood, of course, that the invention is not limited thereto since many modifications may be made, and it is, therefore, contemplated to cover by the appended claims any such modifications as fall within the scope of the appended claims.

## Claims

1. Process of incorporating one or more units or objects (1) into an article (2), such as a transport and/or storage container, a waste container or a pallet made of a polymeric material and moulded, preferably injection moulded, in a moulding tool (3) provided with at least one mould cavity (4)
**characterized** in that
a groove-tenon arrangement is provided between the unit and the wall of the mould cavity (4), comprising at least one undercut tenon (5, 10'), and an equal number of undercut grooves (5', 10) intended to be brought into engagement with the at least one undercut tenon (5, 10'), whereby preferably the object (1) is provided with at least one undercut tenon (5) and the wall of the mould cavity (4) is provided with at least one undercut groove (10); that
fixation of the unit or object (1) in an open moulding tool (3) is obtained when a tenon (5) or groove (5') on said unit or object (1) is brought into engagement with a groove (10) or tenon (10') in said wall of the mould cavity (4), whereby the moulding tool (3) is closed and molten polymeric material is supplied and the mould cavity (4) is filled therewith, so that the unit or object (1) becomes an integrated part of the article made of said moulded polymeric material.

2. Process according to claim 1 characterized in the unit or object (1) is provided with at least one undercut tenon (5) and the mould cavity (4) is provided with at least one undercut groove, whereby the groove (10) has a length exceeding that of the tenon (5), whereby a cavity (9) is formed above or below the tenon (5), which cavity (9) during supply of molten polymeric material is filled resulting in a securing extension (6) of the tenon (5).

3. Process according to claim 2, characterized in that the unit or object (1) is provided with one or more pegs (11), heels or the like for vertical fixation of the unit or object (1) before and during supply of molten polymeric material.

4. Process according to any of the claims 1 to 3, characterized in that the mould cavity (4) is provided with one or more pegs (11), heels or the like for vertical fixation of the unit or object (1) before and/or during supply of molten polymeric material.

5. Process according to any of the claims 1 to 4, characterized in that the unit or object (1) is incorporated adjacent a profile, such as an upper or lower rim (12) or a reinforcing web, girder or rib, being an integrated part of the moulded article (2).

6. Process according to any of the claims 1 to 5, characterized in that the unit or object (1) is or includes at least one smart card, micro chip, radio transmitter and/or receiver, micro processor or other magnetic and/or electronic medium being able to hold analogue and/or digital read/write information.

## Patentansprüche

1. Verfahren zum Einformen von einer/einem oder mehreren Einheiten oder Objekten (1) in einen Artikel (2), wie einen Transport- und/oder Aufbewahrungsbehälter, einen Abfallbehälter oder eine Pallette, die aus einem Polymermaterial gefertigt ist und gegossen ist, vorzugsweise durch Spritzguss, in einem Formwerkzeug (3), das mit mindestens einem Formhohlraum (4) versehen ist, dadurch gekennzeichnet, dass
eine Nut-Feder-Anordnung zwischen der Einheit und der Wand des Formhohlraums (4) vorgesehen ist, umfassend mindestens eine hinterschnittene Feder (5, 10') und eine gleiche Anzahl von hinterschnittenen Nuten (5', 10), die dazu gedacht sind, in Eingriff mit der mindestens einen hinterschnittenen Feder (5, 10') gebracht zu werden, wobei vorzugsweise das Objekt (1) mit mindestens einer hinterschnittenen Feder (5) versehen ist und die Wand des Formhohlraums (4) mit mindestens einer hinterschnittenen Nut (10) versehen ist; dass
eine Befestigung der Einheit oder des Objekts (1) in einem offenen Formwerkzeug (3) erzielt wird, wenn eine Feder (5) oder eine Nut (5') auf der Einheit oder dem Objekt (1) in Eingriff mit einer Nut (10) oder einer Feder (10') in der Wand des Formhohlraums (4) gebracht wird, wobei das Formwerkzeug (3) geschlossen wird und geschmolzenes Polymermaterial zugeführt wird und der Formhohlraum (4) damit gefüllt wird, so dass die Einheit oder das Objekt (1) ein integrierter Teil des Artikels wird, der aus dem gegossenen Polymermaterial gefertigt wird.

2. Verfahren nach Anspruch 1, dadurch gekennzeichnet, dass die Einheit oder das Objekt (1) mit mindestens einer hinterschnittenen Feder (5) versehen ist und der Formhohlraum (4) mit mindestens einer hinterschnittenen Nut versehen ist, wobei die Nut (10) eine Länge hat, die diejenige der Feder (5) übertrifft, wobei ein Hohlraum (9) über oder unter der Feder (5) geformt wird und der Hohlraum (9) während der Zufuhr von geschmolzenem Polymermaterial gefüllt wird, was zu einer Befestigungsverlängerung (6) der Feder (5) führt.

3. Verfahren nach Anspruch 2, dadurch gekennzeichnet, dass die Einheit oder das Objekt (1) mit einem oder mehreren Stiften (11), Absätzen oder ähnlichem, zum vertikalen Befestigen der Einheit oder des Objekts (1) vor und während der Zufuhr von geschmolzenem Polymermaterial versehen ist.

4. Verfahren nach einem der Ansprüche 1 bis 3, dadurch gekennzeichnet, dass der Formhohlraum (4) mit einem oder mehreren Stiften (11), Absätzen oder ähnlichem zum vertikalen Befestigen der Einheit oder des Objekts (1) vor und/oder während der Zufuhr von geschmolzenem Polymermaterial versehen ist.

5. Verfahren nach einem der Ansprüche 1 bis 4, dadurch gekennzeichnet, dass die Einheit oder das Objekt (1) neben einem Profil eingeformt wird, wie einem oberen oder unteren Rand (12) oder einem verstärkenden Gewebe, Balken oder einer Rippe, die ein integrierter Teil des geformten Artikels (2) sind.

6. Verfahren nach einem der Ansprüche 1 bis 5, dadurch gekennzeichnet, dass die Einheit oder das Objekt (1) ist oder umfasst: mindestens eine Smartcard, einen Mikrochip, einen Funksender und/oder -empfänger, einen Mikroprozessor oder ein anderes magnetisches und/oder elektronisches Medium, das in der Lage ist, analoge und/oder digitale Lese/Schreib-Information (Read/Write-Information) zu halten.

## Revendications

1. Procédé d'incorporation d'une ou plusieurs unités ou bien d'un ou plusieurs objets (1) dans un article (2), tel qu'un conteneur de transport et/ou de stockage, un conteneur pour déchets ou bien une palette, faits d'un matériau polymère et moulé, de préférence moulé par injection, dans un outillage de moulage (3) muni d'au moins une cavité de moule (4)
caractérisé en ce que
un agencement de mortaise-tenon est prévu entre l'unité et la paroi de la cavité de moule (4), comprenant au moins un tenon en queue d'aronde (5, 10'), et un nombre égal de mortaises en queue d'aronde (5', 10) prévues pour être amenés en prise avec le au moins un tenon en queue d'aronde (5, 10'), d'où il résulte que de préférence l'objet (1) est muni d'au moins un tenon en queue d'aronde (5) et que la paroi de la cavité de moule (4) est munie d'au moins une mortaise en queue d'aronde (10), en ce que
une fixation de l'unité ou de l'objet (1) dans un outillage de moulage ouvert (3) est obtenue lorsqu'un tenon (5) ou une mortaise (5') sur ladite unité ou ledit objet (1) est amené en prise avec une mortaise (10) ou un tenon (10') dans ladite paroi de la cavité de moule (4), d'où il résulte que l'outillage de moule (3) est fermé et que du matériau polymère fondu est fourni et que la cavité de moule (4) est remplie avec celui-ci, de sorte que l'unité ou l'objet (1) deviennent une partie intégrante de l'article fait dudit matériau polymère moulé.

2. Procédé selon la revendication 1, caractérisé en ce que l'unité ou l'objet (1) sont munis d'au moins un tenon en queue d'aronde (5) et que la cavité de moule (4) est munie d'au moins une mortaise en queue d'aronde, dans lequel la mortaise (10) présente une longueur dépassant celle du tenon (5), d'où il résulte qu'une cavité (9) est formée au-dessus ou bien en dessous du tenon (5), laquelle cavité (9) durant l'alimentation en matériau polymère fondu est remplie, ce qui résulte en un prolongement de retenue (6) du tenon (5).

3. Procédé selon la revendication 2, caractérisé en ce que l'unité ou l'objet (1) sont munis d'une ou plusieurs broches (11), d'un ou plusieurs talons ou analogues en vue d'une fixation verticale de l'unité ou de l'objet (1) avant et durant l'alimentation en matériau polymère fondu.

4. Procédé selon l'une quelconque des revendications 1 à 3, caractérisé en ce que la cavité de moule (4) est munie d'une ou plusieurs broches (11), d'un ou plusieurs talons ou analogues en vue d'une fixation verticale de l'unité ou de l'objet (1) avant et/ou durant l'alimentation en matériau polymère fondu.

5. Procédé selon l'une quelconque des revendications 1 à 4, caractérisé en ce que l'unité ou l'objet (1) sont incorporés de façon adjacente à un profil, tel qu'un rebord supérieur ou inférieur (12) ou une bande, une poutre ou une nervure de renfort, faisant partie intégrante de l'article moulé (2).

6. Procédé selon l'une quelconque des revendications 1 à 5, caractérisé en ce que l'unité ou l'objet (1) sont ou comprennent au moins une carte à puce, une micropuce, un émetteur et/ou récepteur radio, un microprocesseur ou autre support magnétique et/ou électronique qui est capable de conserver des informations de lecture/écriture analogiques et/ou numériques.
